# EUROPÄISCHE PATENTSCHRIFT

(11) **EP 1 054 792 B1**
(45) Veröffentlichungstag und Bekanntmachung des Hinweises auf die Patenterteilung: **27.02.2002**
(21) Anmeldenummer: 98965265.6
(22) Anmeldetag: 15.12.1998
(51) Int. Cl.: B60R 21/20, B60R 21/26

(54) **BAUGRUPPE AUS EINEM GASGENERATOR UND EINEM GASSACK**
GAS GENERATOR ASSEMBLY AND GAS BAG
ENSEMBLE GENERATEUR DE GAZ ET SAC A GAZ

(30) Priorität: 19.02.1998 DE 29802925 U
(43) Veröffentlichungstag der Anmeldung: 29.11.2000
(73) Patentinhaber: TRW Occupant Restraint Systems GmbH & Co. KG, 73553 Alfdorf (DE)
(72) Erfinder: STÜTZ, Michael, D-73565 Spraitbach (DE); WÖLKE, Hartmut, D-73553 Alfdorf-Brech (DE)
(74) Vertreter: Sties, Jochen, Dipl.-Ing.
(86) Internationale Anmeldenummer: EP9808212
(87) Internationale Veröffentlichungsnummer: WO9942335

(56) Entgegenhaltungen:
- EP-A- 0 650 871
- DE-A- 19 603 703
- DE-A- 19 629 541
- DE-A- 19 712 039
- DE-C- 19 700 759
- US-A- 4 223 916
- US-A- 5 605 346

## Beschreibung

Die Erfindung betrifft eine Baugruppe aus einem Gasgenerator und einem mit diesem in Strömungsverbindung stehenden, langgestreckten Gassack, der mit Druckgas, das im Bedarfsfall vom Gasgenerator bereitgestellt wird, aus einem platzsparend zusammengelegten Zustand in einen entfalteten Zustand überführt werden kann;, wobei im Inneren des Gassacks ein druckfestes Platzhalterelement vorgesehen ist, das einen Strömungsweg für das Druckgas im Inneren des Gassacks bereitstellt.

Ein solcher langgestreckter Gassack wird insbesondere als Kopfschutz-Gassack in Kraftfahrzeugen verwendet. Zur Verteilung des im Bedarfsfall vom Gasgenerator bereitgestellten Druckgases im Inneren des Gassacks gibt es derzeit zwei Konzepte. Ein erstes Konzept sieht vor, im Inneren des Gassacks einen flexiblen Gewebeschlauch vorzusehen, der mit Ausströmöffnungen versehen ist. Der Nachteil bei dieser Gestaltung liegt darin, daß die Wandung des Gewebeschlauchs bei zusammengelegtem Gassack flach aufeinanderliegt, so daß das von einer Seite in den Gewebeschlauch eingeleitete Druckgas den Gewebeschlauch erst aufweiten muß, bevor es durch ihn hindurchströmen kann. Dies führt zu einer Erhöhung der zum Entfalten des Gassacks erforderlichen Zeit. Der Vorteil bei dieser Gestaltung besteht dagegen darin, daß der Gassack nahezu beliebig zusammengelegt werden kann, da der Gewebeschlauch nicht stört. Ein zweites Konzept sieht vor, im Inneren des Gassacks ein biegesteifes Rohr anzuordnen, eine sogenannte Gaslanze. Diese Gaslanze ist mit Ausströmöffnungen versehen, durch die das Druckgas in das Innere des Gassacks einströmen kann. Der Vorteil dieser Gestaltung besteht darin, daß der Gassack sehr schnell entfaltet werden kann, da der Strömungsweg im Inneren der Gaslanze auch bei zusammengelegtem Gassack erhalten bleibt. Der Nachteil bei dieser Gestaltung besteht darin, daß die starre Gaslanze die Handhabung und das Zusammenlegen des Gassacks beeinträchtigt.

Aus der DE 197 00 759 C1 ist eine Baugruppe der eingangs genannten Art bekannt, bei der als Platzhalterelement ein Gasführungskanal vorgesehen ist. Der Gasführungskanal ist zusammen mit dem Gehäuse plastisch verformbar, um die Baugruppe der Dachkontur im Fahrzeug anpassen zu können.

In der US A 5 605 346 ist eine Baugruppe beschrieben, bei der eine Gaslanze teilweise ins Innere des eines dreieckigen Gassackes ragt. Die Gaslanze kann aus Gewebe bestehen und dient als Führung für den unteren Abschnitt des Gassackes beim Entfalten.

Die DE 196 03 703 A beschreibt einen Gasgenerator mit einer flexiblen schlauchförmigen Hülle.

Die Erfindung schafft eine Baugruppe aus einem Gasgenerator und einem Gassack, welche die Vorteile der beiden genannten Konzepte miteinander verbindet. Gemäß der Erfindung ist bei einer Baugruppe der eingangs genannten Art vorgesehen, daß das Platzhalteelement flexibel ist und zusammen mit dem Gassack zusammengerollt oder sonstwie in eine kompakte Gestaht über führt werden kann. Auf diese Weise ist auch bei einem zusammengelegten Gassack ein freier Strömungsweg vorhanden, durch den hindurch das Druckgas ohne Beeinträchtigung in den Gassack einströmen kann.

Eine bevorzugte Ausgestaltung der Erfindung ergibt sich aus dem Unteranspruch.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einer schematischen Seitenansicht eine erfindungsgemäße Baugruppe, wobei der Gassack sich im platzsparend zusammengelegten Zustand befindet, während des Platzhalterelement im nicht Zusammengerollten Zustand ist;
- Figur 2 einen Schnitt entlang der Ebene II-II von Figur 1;
- Figur 3 eine Ansicht entsprechend derjenigen von Figur 2,
   wobei sich jedoch der Gassack im entfalteten Zustand befindet;
- Figur 4 in einer schematischen Seitenansicht die erfindungsgemäße Baugruppe, wobei der Gassack zusammen mit dem Platzhalterelement spiralförmig aufgewickelt ist.

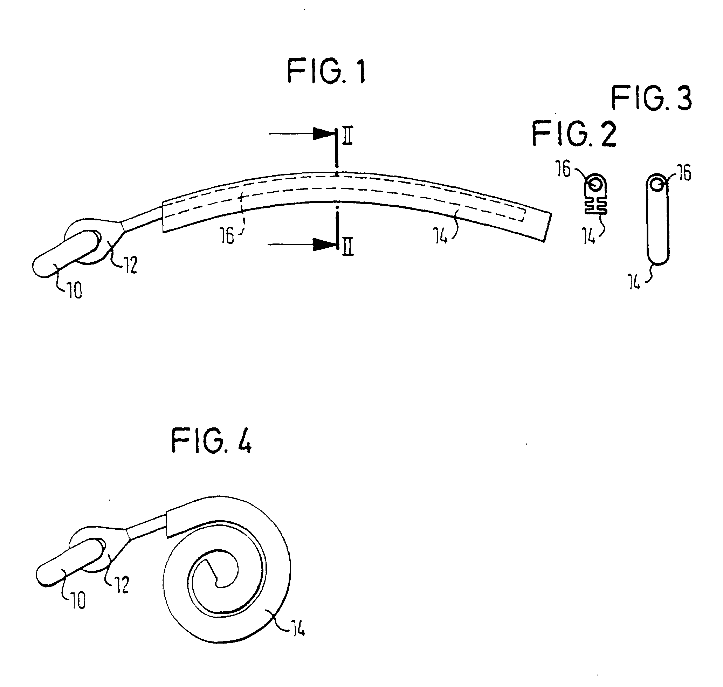

In Figur 1 ist eine erfindungsgemäße Baugruppe dargestellt. Diese besteht aus einem Gasgenerator 10, der mittels einem schematisch dargestellten Gehäuse 12 mit einem Gassack 14 in Strömungsverbindung steht. An das Gehäuse 12 angeschlossen ist ein Platzhalterelement 16 das einerseits flexibel und andererseits druckfest ist. Das Platzhalterelement 16 kann insbesondere eine Spiralfeder sein. Unter einem flexiblen, jedoch gleichzeitig druckfesten Platzhalterelement wird hier ein Element verstanden, das durch Druck in insbesondere radialer Richtung von außen allenfalls geringfügig zusammengedrückt werden kann, so daß der freie Innenquerschnitt im wesentlichen erhalten bleibt, während gleichzeitig ein Verformen des Platzhalterelementes aus einer beispielsweise langgestreckten Gestalt heraus möglich ist.

In Figur 2 ist die Baugruppe von Figur 1 im Querschnitt mit platzsparend zusammengelegtem Gassack gezeigt. Es ist zu sehen, daß das Platzhalterelement 16 einen Strömungsweg im Inneren des Gassacks 14 freihält, durch den im Bedarfsfall vom Gasgenerator 10 erzeugtes Druckgas in Längsrichtung in den zusammengelegten Gassack hinein einströmen und diesen in einen entfalteten Zustand überführen kann. Dieser Zustand ist in Figur 3 gezeigt.

In Figur 4 ist die erfindungsgemäße Baugruppe mit platzsparend zusammengelegtem Gassack gezeigt, wobei der zusammengelegte Gassack zusammen mit dem darin befindlichen Platzhalter 16 schneckenförmig zusammengerollt ist. Im Gegensatz zur bisher bekannten Gaslanze, die starr ist und sowohl beim Transport als auch bei der Montage die Handhabbarkeit einer Baugruppe aus einem Gasgenerator und einem Gassack beeinträchtigt, kann bei der erfindungsgemäßen Baugruppe aufgrund der Flexibilität des Platzhalters der Gassack 14 in vielfältigster Weise zum Zwecke des Transports, der Handhabung oder der Montage zusammengerollt oder sonstwie in eine kompakte Gestalt überführt werden.

## Patentansprüche

1. Baugruppe aus einem Gasgenerator (10) und einem mit diesem in Strömungsverbindung stehenden, langgestreckten Gassack (14), der mit Druckgas, das im Bedarfsfall vom Gasgenerator (10) bereitgestellt wird, aus einem platzsparend zusammengelegten Zustand in einen entfalteten Zustand überführt werden kann, wobei im Inneren des Gassacks (14) ein druckfestes Platzhalterelement (16) vorgesehen ist, das einen Strömungsweg für das Druckgas im Inneren des Gassacks (14) bereitstellt, **dadurch gekennzeichnet, daß** das Platzhalterelement (16) flexibel ist und zusammen mit dem Gassack (14) zusammengerollt oder sonstwie in eine kompakte Gestelt überführt werden kann.

2. Baugruppe nach Anspruch 1, **dadurch gekennzeichnet, daß** das Platzhalterelement eine Spiralfeder (14) ist.

## Claims

1. An assembly comprising an inflator (10) and an elongated gas bag (14) in fluid communication therewith, said gas bag (14) being transferable from a space-savingly folded condition into a deployed condition by compressed gas made available by said inflator (10) when required, a compression-resistant space keeper (16) being provided in the interior of said gas bag (14) which provides a flow path for the compressed gas in the interior of said gas bag (14), **characterized in that** said space keeper (16) is flexible and able to be rolled up or otherwise be transferred into a compact configuration together with said gas bag (14).

2. The assembly as set forth in claim 1, **characterized in that** said space keeper is a coil spring (16).

## Revendications

1. Ensemble constitué par un générateur de gaz (10) et un coussin à gaz (14) allongé en communication fluidique avec celui-ci, le coussin à gaz (14) pouvant être amené depuis un état replié de faible encombrement dans un état déployé à l'aide de gaz comprimé qui est fourni en cas de besoin par le générateur de gaz (10), un élément de réserve de place (16) étant prévu à l'intérieur du coussin à gaz (14), lequel fournit une voie d'écoulement au gaz de compression à l'intérieur du coussin à gaz (14), **caractérisé en ce que** l'élément de réserve de place (16) est flexible et peut être roulé ou amené d'une autre façon dans une configuration compacte conjointement avec le coussin à gaz (14).

2. Ensemble selon la revendication 1, **caractérisé en ce que** l'élément de réserve de place est un ressort en spirale (16).
